# EUROPÄISCHE PATENTANMELDUNG

(11) **EP 0 588 058 A1**
(43) Veröffentlichungstag der Anmeldung: **23.03.1994**
(21) Anmeldenummer: 93112847.4
(22) Anmeldetag: 11.08.1993
(51) Int. Cl.: F16P 3/10, H01H 27/00, H01H 11/00

(54) **Sicherheitsschalter für Schutzabdeckungen oder Dergleichen**

(30) Priorität: 16.09.1992 DE 9212428 U
(71) Anmelder: HANS BERNSTEIN SPEZIALFABRIK FÜR SCHALTKONTAKTE GmbH & CO., D-32457 Porta Westfalica (DE)
(72) Erfinder: Wecke, Rolf, Dipl.-Ing., D-31675 Bückeburg (DE); Mönnings, Roland, Dipl.-Ing., D-32457 Porta Westfalica (DE); Gerner, Meinhard, Dip.-Des., D-32423 Minden (DE)
(74) Vertreter: Stracke, Alexander, Dipl.-Ing.

(57) **Zusammenfassung**

Gegenstand der Erfindung ist ein Sicherheitsschalter (1) für Schutzabdeckungen oder dergleichen.

Der erfindungsgemäße Sicherheitsschalter (1) besteht aus einem Schaltergehäuse (2) und einem damit lösbar verbundenen Betätigungskopf (3), welcher mit einer Betätigungsöffnung für ein Betätigungselement (7) versehen ist.

Der Betätigungskopf (3) ist diagonal unter einem Winkel von 45° zur Längsachse der Betätigungsöffnung sowie zur Verbindungsebene (5) zwischen Schaltergehäuse (2) und Betätigungskopf (3) geteilt, wobei die beiden Teile (3a und 3b) des Betätigungskopfes (3) durch zu einem gemeinsamen Lochkreis angeordnete Verbindungsschrauben (6) lösbar miteinander verbunden sind.

Der Vorteil dieser Konstruktion liegt darin, daß die Betätigungsöffnung des Betätigungskopfes (3) wahlweise in eine parallel oder rechtwinklig zur Verbindungsebene zwischen Schaltergehäuse (2) und Betätigungskopf (3) verlaufende Position gebracht werden kann. Somit sind die möglichen Funktionsstellungen des Betätigungskopfes (3) gegenüber einem ungeteilten Betätigungskopf (3) vervielfacht.

## Beschreibung

Die vorliegende Erfindung betrifft einen Sicherheitsschalter für Schutzabdeckungen od. dgl., bestehend aus einem Schaltergehäuse und einem Betätigerkopf, der mit dem Schaltergehäuse durch auf einem gemeinsamen Lochkreis angeordnete Schrauben lösbar verbunden und mit einer in einem Abstand zum Mittelpunkt des Lochkreises verlaufenden Betätigungsöffnung für ein Betätigungselement versehen ist, welches beim Einführen in die Betätigungsöffnung bzw. beim Herausziehen aus der Betätigungsöffnung einen Schaltvorgang auslöst.

Sicherheitsschalter der vorerwähnten Art sind ansich bekannt.

Prinzipieller Zweck derartiger Sicherheitsschalter ist es, zu gewährleisten, daß Maschinen oder Motoren nur dann einschaltbar sind, wenn bestimmte Schutzvoraussetzungen vorliegen. Beispielsweise sei hier auf Schutzabdeckungen für Maschinenteile hingewiesen.

Das Betätigungselement ist in der Regel beispielsweise an einer Schutzabdeckung befestigt, so daß nach dem Öffnen einer Schutzabdeckung und demzufolge aus dem Betätigerkopf herausgezogenem Betätigungselement ein Ausschalten einer entsprechend gesicherten Maschine erfolgt.

In der Regel sind der Betätigerkopf und das Betätigungselement so gestaltet, daß ein Schaltvorgang unter Zuhilfenahme einfacher Werkzeuge nicht ausgelöst werden kann.

Aufgrund der Tatsache, daß der Betätigerkopf lösbar mit dem Schaltergehäuse verbunden und die Schrauben auf einem gemeinsamen Lochkreis angeordnet sind, wobei die Betätigungsöffnung einen Abstand zum Mittelpunkt des Lochkreises aufweist, besteht die Möglichkeit, bestimmten Einbau- oder Anbausituationen an einer Maschine Rechnung zu tragen, d. h., die Betätigungsöffnung kann - bezüglich der Montageebene des gesamten Sicherheitsschalters - in verschiedene Positionen gebracht werden.

Der vorliegenden Erfindung liegt die Aufgabe zugrunde, einen Sicherheitsschalter der gattungsgemäßen Art mit einfachen und kostengünstigen Mitteln so zu gestalten, daß weitere Funktionsstellungen der Betätigungsöffnung des Betätigerkopfes erzielbar sind.

Diese Aufgabe wird erfindungsgemäß dadurch gelöst, daß der Betätigungskopf diagonal unter einem Winkel von 45^ zur Längsachse der Betätigungsöffnung sowie zur Verbindungsachse zwischen Schaltergehäuse und Betätigungskopf geteilt ist und daß die beiden Teile des Betätigungskopfes durch auf einem gemeinsamen Lochkreis angeordnete Verbindungsschrauben lösbar miteinander verbunden sind.

Durch diese vergleichsweise einfache und auch kostengünstige Maßnahme wird erreicht, daß die Betätigungsöffnung wahlweise in eine parallel oder rechtwinklig zur Verbindungsebene zwischen Schaltergehäuse und Betätigungskopf verlaufende Position gebracht werden kann. Hierdurch werden die möglichen Funktionsstellungen des Betätigungskopfes bzw. der Betätigungsöffnung vervielfacht, so daß praktisch allen möglichen Einbausituationen eines derartigen Sicherheitsschalters Rechnung getragen werden kann.

Ein Ausführungsbeispiel der Erfindung ist in den beigefügten Zeichnungen dargestellt und wird im folgenden näher beschrieben.

Es zeigen:
- Figur 1: eine Ansicht eines erfindungsgemäßen Sicherheitsschalters,
- Figur 2: eine der Figur 1 entsprechende Ansicht des Sicherheitsschalters mit verändertem Betätigungskopf,
- Figur 3: Ansichten des Sicherheitsschalters in Richtung des Pfeiles III in Figur 1 in verschiedenen Montagestellungen des Betätigungskopfes,
- Figur 4: Ansichten des Sicherheitsschalters in Richtung des Pfeiles IV in verschiedenen Montagestellungen des Betätigungskopfes in der Zusammenbaulage gemäß Figur 2.

In den Zeichnungen ist mit dem Bezugszeichen 1 ein Sicherheitsschalter für Schutzabdeckungen bezeichnet, der aus einem Schaltergehäuse 2 und einem Betätigungskopf 3 besteht.

Der Betätigungskopf 3 ist in ansich bekannter und deshalb nicht weiter dargestellten Art und Weise lösbar mit dem Schaltergehäuse 2 verbunden. Dabei sind die nicht dargestellten Schrauben in bekannter Weise auf einem gemeinsamen Lochkreis angeordnet, wodurch die Möglichkeit eröffnet wird, den Betätigungskopf 3 in verschiedenen Verschwenkpositionen am Schaltergehäuse 2 zu befestigen.

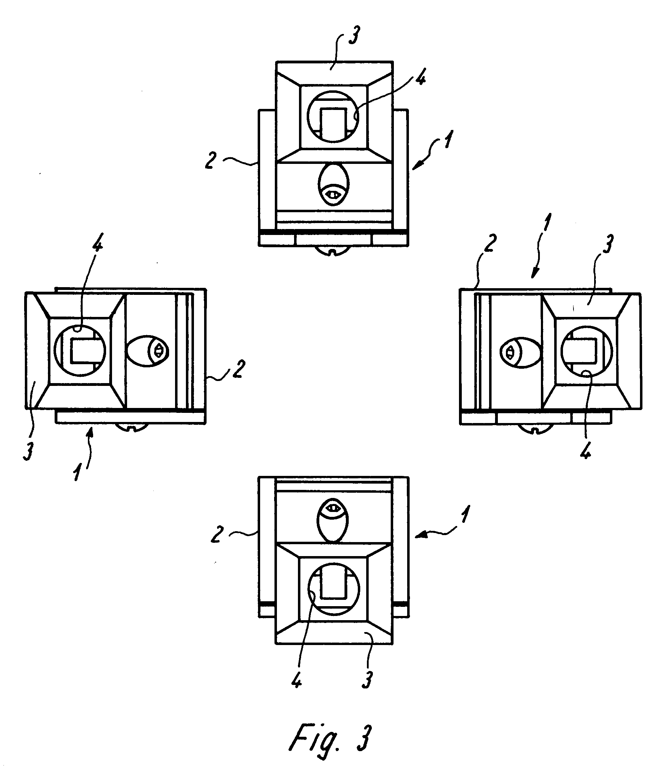

Der Betätigungskopf 3 ist mit einer Betätigungsöffnung 4 versehen (sh. Figur 3) in die ein nicht dargestelltes Betätigungselement einführbar ist.

Durch Einführen des Betätigungselementes in die Betätigungsöffnung 4 bzw. beim Herausziehen aus dieser Betätigungsöffnung 4 wird jeweils ein Schaltvorgang des Sicherheitsschalters 1 ausgelöst.

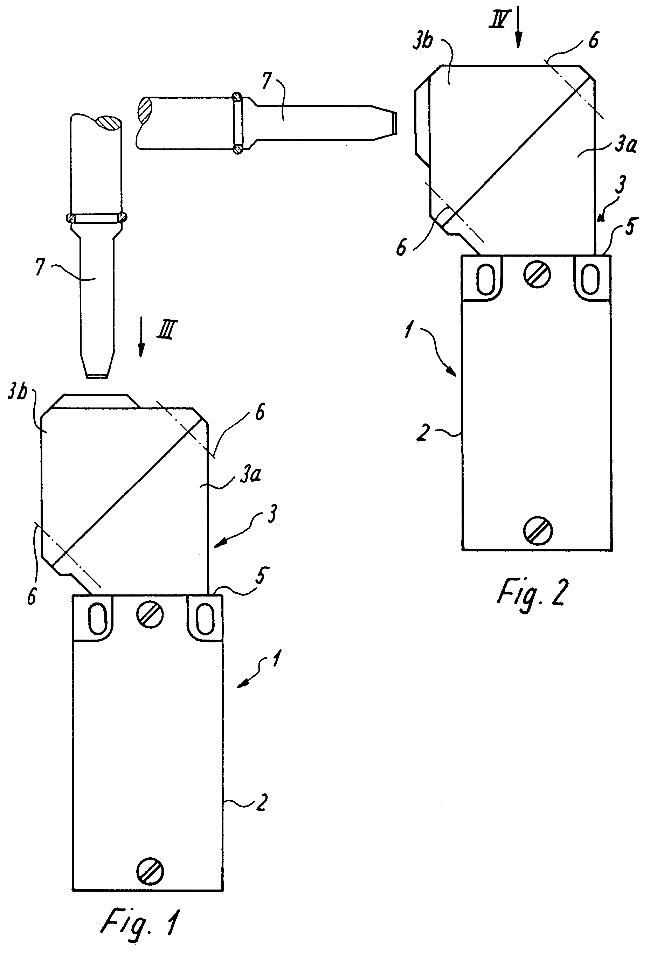

Wie die Figuren 1 und 2 deutlich machen, ist der Betätigungskopf 3 diagonal unter einem Winkel von 45^ zur Längsachse der Betätigungsöffnung 4 sowie zur Verbindungsebene 5 zwischen Schaltergehäuse 2 und Betätigungskopf 3 geteilt und die beiden Teil 3a und 3b des Betätigungskopfes 3 sind durch Verbindungsschrauben 6, die in den Figuren 1 und 2 durch strichpunktierte Linien lediglich angedeutet sind, lösbar miteinander verbunden. Diese Verbindungsschrauben 6 liegen auf einem gemeinsamen Lochkreis, so daß die Möglichkeit besteht, die beiden Teile 3a und 3b des Betätigungskopfes 3 in unterschiedlichen Montagestellungen miteinander zu verbinden, wie Figuren 1 und 2 deutlich zeigen.

Die in Figur 1 gezeigte Verbindungslage zwischen den beiden Teilen 3a und 3b des Betätigungskopfes 3 entspricht einer Baueise, wie sie bei ungeteilten Betätigungsköpfen üblich ist. In dieser Verbindungsstellung verläuft die Einführöffnung 4 lotrecht zur Verbindungsebene 5 zwischen Betätigungskopf 3 und Schaltergehäuse 2. Außerdem ist die Betätigungsöffnung bei dieser Montagestellung in einem Abstand zum Mittelpunkt desjenigen Lochkreises angeordnet, auf dem die Schrauben zur Verbindung von Betätigungskopf 3 und Schaltergehäuse 2 angeordnet sind.

Wird also der Betätigungskopf 3 in unterschiedlichen Stellungen am Schaltergehäuse 2 befestigt, so ergeben sich die aus Figur 3 ersichtlichen Positionen der Betätigungsöffnung 4 relativ zum Schaltergehäuse 2.

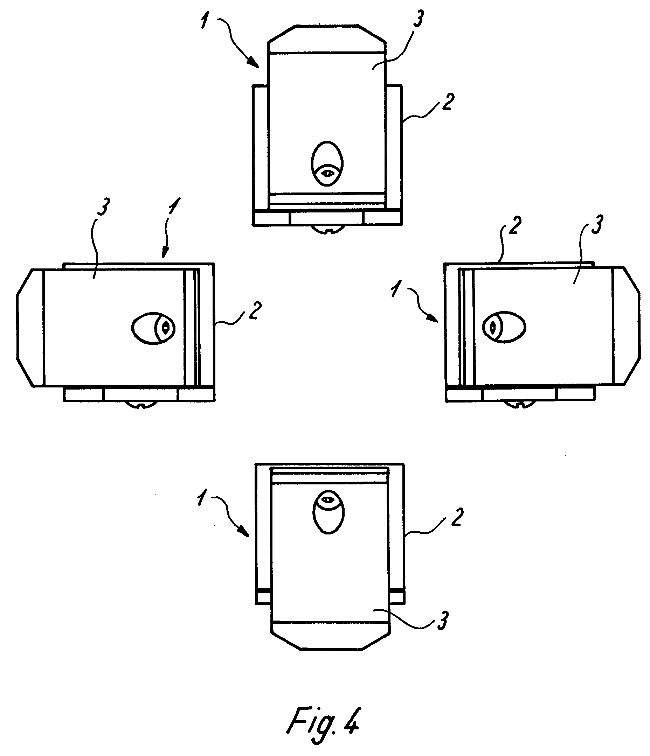

Wird hingegen das die Betätigungsöffnung 4 aufweisende Teil 3b des Betätigungskopfes 3 in der aus Figur 2 ersichtlichen Lage mit dem Teil 3a verbunden, so verläuft die Betätigungsöffnung 4 parallel zur Verbindungsebene 5 zwischen Betätigungskopf 3 und Schaltergehäuse 2. Durch Verdrehen des gesamten Betätigungskopfes 3 gegenüber dem Schaltergehäuse 2 können dementsprechend die aus Figur 4 ersichtlichen Positionen erreicht werden.

Insgesamt ergeben sich durch den diagonal geteilten Betätigungskopf 3 einerseits und durch die lösbare Verbindung zwischen Betätigungskopf 3 und Schaltergehäuse 2 andererseits acht verschiedene Montagestellung des Betätigungskopfes 3, wobei jeweils eine Verdrehung des Betätigungskopfes 3 um 90^ gegenüber dem Schaltergehäuse 2 vorausgesetzt ist. Durch die Verwendung einer größeren Anzahl von Verschraubungspositionen zwischen Betätigungskopf 3 und Schaltergehäuse 2 können zusätzliche Funktionsstellungen erreicht werden, wenngleich die in den Figuren 3 und 4 dargestellten Positionen in der Praxis vollkommen ausreichen dürften.
In den Figuren 1 und 2 ist jeweils ein Betätigungselement 7 zur Betätiung des Sicherheitsschalters 1 angedeutet.

## Patentansprüche

1. Sicherheitsschalter für Schutzabdeckungen od. dgl., bestehend aus einem Schaltergehäuse und einem Betätigungskopf, der mit dem Schaltergehäuse durch auf einem gemeinsamen Lochkreis angeordnete Schrauben lösbar verbunden und mit einer in einem Abstand zum Mittelpunkt des Lochkreises verlaufenden Betätigungsöffnung für ein Betätigungselement versehen ist, welches beim Einführen in die Betätigungsöffnung bzw. beim Herausziehen aus der Betätigungsöffnung einen Schaltvorgang auslöst, dadurch gekennzeichnet, daß der Betätigungskopf (3) diagonal unter einem Winkel von 45^ zur Längsachse der Betätigungsöffnung (4) sowie zur Verbindungsebene (5) zwischen Schaltergehäuse (2) und Betätigungskopf (3) geteilt ist und daß die beiden Teile (3a und 3b) des Betätigungskopfes (3) durch auf einen gemeinsamen Lochkreis angeordnete Verbindungsschrauben (6) lösbar miteinander verbunden sind.
